# FASCICULE DE BREVET EUROPEEN

(11) **EP 4 473 202 B1**
(45) Date de publication et mention de la délivrance du brevet: **03.12.2025**
(21) Numéro de dépôt: 23706389.6
(22) Date de dépôt: 18.01.2023
(51) Int. Cl.: F02C 6/20, F02C 9/58, F02K 1/66

(54) **PROCÉDÉ DE FREINAGE D'UNE TURBOMACHINE D'AÉRONEF**
VERFAHREN ZUM ABBREMSEN EINES FLUGZEUGTURBINENMOTORS
METHOD FOR BRAKING AN AIRCRAFT TURBINE ENGINE

(30) Priorité: 01.02.2022 FR 2200883
(43) Date de publication de la demande: 11.12.2024
(73) Titulaire: SAFRAN AIRCRAFT ENGINES, 75015 Paris (FR)
(72) Inventeur: AURIOL, Jacques, 77550 MOISSY-CRAMAYEL (FR); REIGNER, Pierre-Alain Jean Philippe, 77550 MOISSY CRAMAYEL (FR)
(74) Mandataire: Casalonga
(86) Numéro de dépôt international: PCT/FR2023/050072
(87) Numéro de publication internationale: WO 2023/148439

(56) Documents cités:
- US-A1- 2013 033 204
- US-A1- 2015 098 792
- US-A1- 2020 215 922
- US-A1- 2020 307 774

## Description

### Domaine technique

La présente invention concerne, de manière générale, les turbomachines pour aéronef, et notamment les turbomachines équipées d'une soufflante ou d'une hélice à calage variable connectée à une turbine par l'intermédiaire d'un arbre et, plus précisément, le freinage de telles turbomachines.

Plus particulièrement, l'invention se rapporte à un procédé de freinage d'une turbomachine comportant une turbine connectée à une soufflante ou à une hélice à calage variable par un arbre.

### Etat de la technique

Classiquement, le freinage d'un aéronef par une turbomachine équipée d'une soufflante ou d'une hélice à calage variable repose, tout du moins en partie, sur une inversion de poussée, également connu sous le terme anglais « reverse ». En particulier, l'angle des pales de la soufflante ou de l'hélice est modifié de façon à ce que le souffle crée par la rotation des pales soit redirigé vers l'avant et participe au freinage de l'aéronef.

L'orientation des pales peut être ajustée soit en passant par une zone de petits pas, soit une zone de pas élevés.

Le passage par les petits pas ou pas nuls est privilégié. En effet, il génère moins de couple et n'inverse pas le profil de la pale par rapport au flux d'air incident, ce qui améliore la poussée de freinage et réduit le décrochage du flux d'air, qui peut être problématique pour la tenue mécanique et en fatigue de l'hélice.

Cependant, il conduit à une augmentation du régime de l'hélice et le dépassement de régime résultant est tel qu'il doit être pris en compte pour le dimensionnement des parties tournantes.

Le redimensionnement a pour conséquence d'augmenter la masse de la turbomachine, ce qui est incompatible avec les démarches d'allégement de l'aéronef.

En complément, l'augmentation de régime lorsque l'hélice ou la soufflante traverse la zone des petits pas conduit, sur les architectures à compresseurs basse pression liés à l'arbre basse pression, à une désadaptation de compression entre le corps haute pression, qui est à un régime ralenti et le compresseur du corps basse pression, qui au contraire, est en limite de compression par son régime élevé et le débit faible qu'autorise le core au ralenti, ce qui rend la turbomachine sujette à un phénomène dit de pompage ou décrochage se traduisant par une instabilité aérodynamique de la turbomachine.

Une solution classique pour traiter ce problème est le redimensionnement du compresseur basse pression pour disposer d'une capacité de compression supplémentaire dans ces conditions, ce qui impacte le coût et la masse de l'aéronef.

Les documents US 2020/307774 A1, US 2020/215922 A1, US 2015 098792 A1 et US 2013/033204 A1 décrivent des procédés de fonctionnement de turbomachine de l'art antérieur

### Exposé de l'invention

L'invention a donc pour but de remédier à ces inconvénients et de proposer un procédé de freinage suffisant et adapté pour une turbomachine connectée par l'intermédiaire d'un arbre à une soufflante ou une hélice à calage variable, sans qu'il soit nécessaire de redimensionner la turbomachine ou augmenter sa masse.

Il est donc proposé un procédé de freinage d'une turbomachine pour aéronef comportant une soufflante ou une hélice reliée à une turbine par un arbre, et une génératrice électrique connectée à l'arbre, le procédé comprenant les étapes suivantes :
une requête de freinage de la turbomachine par inversion de poussée ;
un calcul d'une consigne de freinage de la turbine par un système de commande ; et
en réponse à la consigne de freinage, un ajustement par le système de commande d'une résistance d'une charge dissipative pour le prélèvement de puissance électrique de la génératrice électrique vers la charge dissipative.

De préférence, le procédé de freinage comprend un contrôle de calage des pales de la soufflante ou de l'hélice, l'étape d'ajustement de la résistance étant effectuée lorsque la soufflante ou l'hélice fonctionne à un régime de rotation en moulinet.

Avantageusement, la consigne de freinage peut être égale à un couple demandé pour le freinage auquel est soustrait un couple dédié à des consommateurs de puissance électrique de l'aéronef.

De préférence, la consigne de freinage est calculée en fonction de la capacité thermique de la charge dissipative.

Selon un mode de mise en œuvre, la charge dissipative peut être formée par la génératrice électrique.

Selon une caractéristique, la génératrice électrique peut être mise en court-circuit interne et simultanément déconnectée du réseau électrique de l'aéronef lors du prélèvement de puissance électrique pendant la faible durée de la transition en reverse.

Selon un autre mode de mise en œuvre, la résistance de la charge dissipative peut être formée par la résistance d'un système de dégivrage.

Selon un autre mode de mise en œuvre, la turbomachine comprend un corps basse pression et un corps haute pression, la turbine reliée à la soufflante ou hélice étant une turbine du corps basse pression, la résistance étant formée par un contrôleur de moteur électrique haute pression du corps haute pression, et la charge dissipative étant formée par un moteur électrique du corps haute pression. Ceci permet de limiter l'augmentation de régime basse pression lorsque l'hélice ou la soufflante traverse la zone des petits pas, tout en aidant le régime haute pression, afin de permettre au core d'accélérer à la puissance maximale d'inversion de poussée après la transition du calage.

L'invention concerne également un turbomachine d'aéronef comportant une soufflante ou une hélice reliée à une turbine par un arbre, et une génératrice électrique connectée à l'arbre la turbomachine comprenant un système de commande configuré pour calculer une consigne de freinage de la turbine en réponse à une requête de freinage de la turbomachine par inversion de poussée, et configuré pour ajuster une résistance d'une charge dissipative en réponse à la consigne de freinage pour le prélèvement de puissance électrique de la génératrice électrique vers la charge dissipative.

De préférence, le système de commande est configuré pour calculer la consigne freinage en fonction de la capacité thermique de la charge dissipative.

Selon un mode de réalisation, la charge dissipative peut être formée par la génératrice électrique.

L'invention concerne en outre un aéronef comprenant au moins une turbomachine comme décrit précédemment.

### Brève description des dessins

D'autres buts, avantages et caractéristiques ressortiront de la description qui va suivre, donnée à titre purement illustratif et faite en référence aux dessins annexés sur lesquels :
[Fig 1] illustre schématiquement une turbomachine d'aéronef selon un mode de réalisation de l'invention.
[Fig 2] illustre schématiquement l'architecture d'une génératrice électrique connectée à une charge dissipative d'une turbomachine selon un mode de réalisation de l'invention.
[Fig 3] illustre une logique de freinage selon un mode de réalisation de l'invention.
[Fig 4] illustre une logique de protection contre la surchauffe de la charge dissipative selon un mode de réalisation de l'invention.
[Fig 5] illustre le calcul d'une consigne de freinage en fonction du couple dédié à des consommateurs du réseau électrique de l'aéronef.

Par ailleurs, l'expression « au moins un » utilisée dans la présente description est équivalente à l'expression « un ou plusieurs ».

### Exposé détaillé d'un mode de réalisation

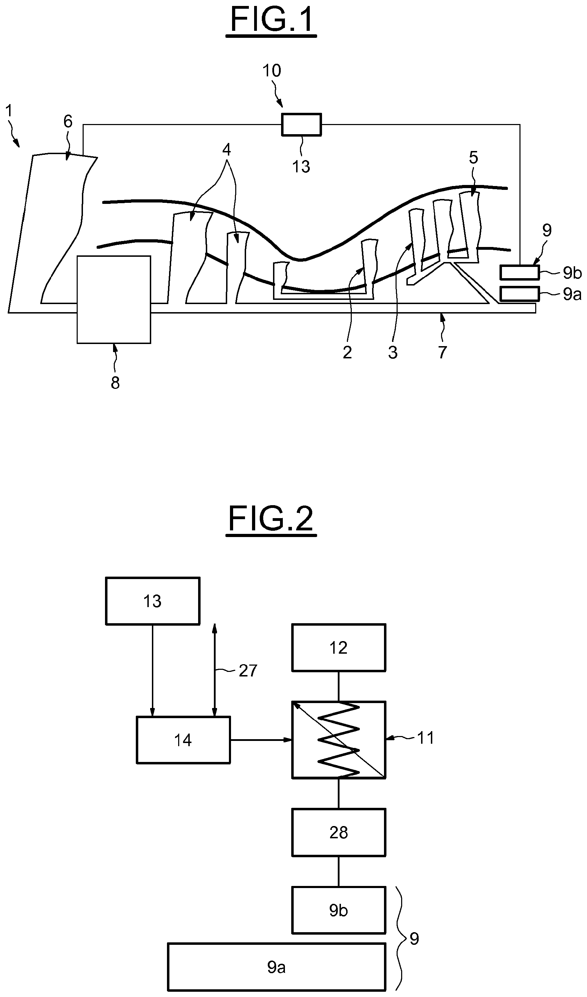

La figure 1 illustre schématiquement une turbomachine 1 d'aéronef.

Dans l'exemple illustré, la turbomachine comprend un corps haute pression 2 comportant un compresseur haute pression et une turbine haute pression, et un corps basse pression 3 comportant un compresseur basse pression 4 et une turbine basse pression 5.

Le corps basse pression 3 est connecté à une soufflante 6 par l'intermédiaire d'un arbre 7 et d'un réducteur 8.

Dans l'exemple illustré, la soufflante 6 est une soufflante à calage variable.

En variante, la soufflante 6 peut être substituée par une hélice, par exemple une hélice à calage variable.

De plus, une génératrice électrique 9 reliée à l'arbre 7 est disposée en aval de la turbine basse pression 5 et comporte un rotor 9a et un stator 9b.

La génératrice électrique 9 comporte une résistance interne.

On pourra prévoir que la génératrice électrique 9 soit disposée en amont de la turbine basse pression 5, par exemple en périphérie de la soufflante 6.

La turbomachine 1 comprend un système de commande 10 configuré pour calculer une consigne de freinage de la turbine 5 en réponse à une requête de freinage de la turbomachine 1 par inversion de poussée.

Le système de commande 10 est en outre configuré pour ajuster la résistance 11 d'une charge dissipative 12 comme cela est illustré à la figure 2, en réponse à la consigne de freinage pour le prélèvement de la puissance électrique de la génératrice électrique 9 vers la charge dissipative 12. La résistance 11 est une résistance variable.

En d'autres termes, le système de commande 10 est apte à ajuster le couple sur l'arbre 7 du corps basse pression 3 en fonction de la consigne de freinage de façon en prélever et dissiper une partie de la puissance électrique de la génératrice électrique 9 vers la charge dissipative 12.

Par consigne de freinage, on entend une consigne de prélèvement de couple, dans l'exemple illustré de la turbine basse pression 5 sur le corps basse pression 5.

Dans l'exemple illustré, le système de commande 10 comporte un calculateur de régulation 13 configuré pour calculer la consigne de freinage et un calculateur de contrôle de couple 14 configuré pour ajuster la résistance 11 de la charge dissipative 12 en fonction de la consigne de freinage.

Le calculateur de régulation 13 et le calculateur de contrôle de couple 14 sont connectés par liaison électrique. La liaison électrique peut être analogique ou numérique.

De préférence, le système de commande 10 est également configuré pour calculer la consigne freinage en fonction de la capacité thermique de la charge dissipative 12.

Selon un autre mode de réalisation, la charge dissipative 12 est formée par la génératrice électrique 9.

Dans ce cas, on pourra prévoir que le système de commande 10 inclut un calculateur de la génératrice électrique 9 configuré pour calculer la consigne de freinage et ajuster la résistance 11 de court-circuit de la génératrice électrique 9 en réponse à la consigne de freinage.

De préférence, le système de commande 10, par exemple le calculateur de régulation 13, est configuré pour contrôler le calage de la soufflante 6.

L'invention concerne également un procédé de freinage de la turbomachine 1 d'aéronef comprenant une requête de freinage, demandé par exemple par le pilote de l'aéronef, associé à un couple de freinage demandé 15 pour le freinage de la turbomachine 1 par inversion de poussée.

Dans l'exemple illustré, le couple considéré à limiter est le couple d'entraînement du corps basse pression 3 généré sur l'arbre 7 par la turbine basse pression 5 et la soufflante 6.

Le procédé de freinage comprend en outre le calcul d'une consigne de freinage de la turbine basse pression 5 par le système de commande 10.

Comme cela est illustré à la figure 2, dans l'exemple illustré, la consigne de freinage est calculée par le calculateur de régulation 13 puis communiquée au calculateur de contrôle de couple 14.

De préférence, le calcul de la consigne de freinage de la turbine basse pression 5 est effectué seulement après réception d'une autorisation de freinage.

En réponse à la consigne de freinage, un ajustement par le système de commande ajuste la résistance 11 de la charge dissipative 12 de sorte qu'une partie de la puissance électrique de la génératrice électrique 9 soit dissipée vers la charge dissipative 12.

Il résulte de la dissipation de courant de la génératrice électrique 9 au travers de la charge dissipative 12 une limitation du couple généré par la turbine basse pression 5 et la soufflante 6 afin d'effectuer le freinage.

Dans l'exemple illustré, la résistance 11 est ajustée par le calculateur de contrôle de couple 14.

De préférence, l'étape d'ajustement de la résistance 11 est effectuée lorsque la soufflante 6 fonctionne à un régime de rotation en moulinet dit « windmilling » en langue anglaise.

La soufflante 6 est amenée à un régime de rotation en moulinet par contrôle de calage de ses pales.

Par régime de rotation en moulinet ou « windmilling », on entend un fonctionnement de la soufflante 6 dans lequel le couple apporté par la soufflante 6 est nul.

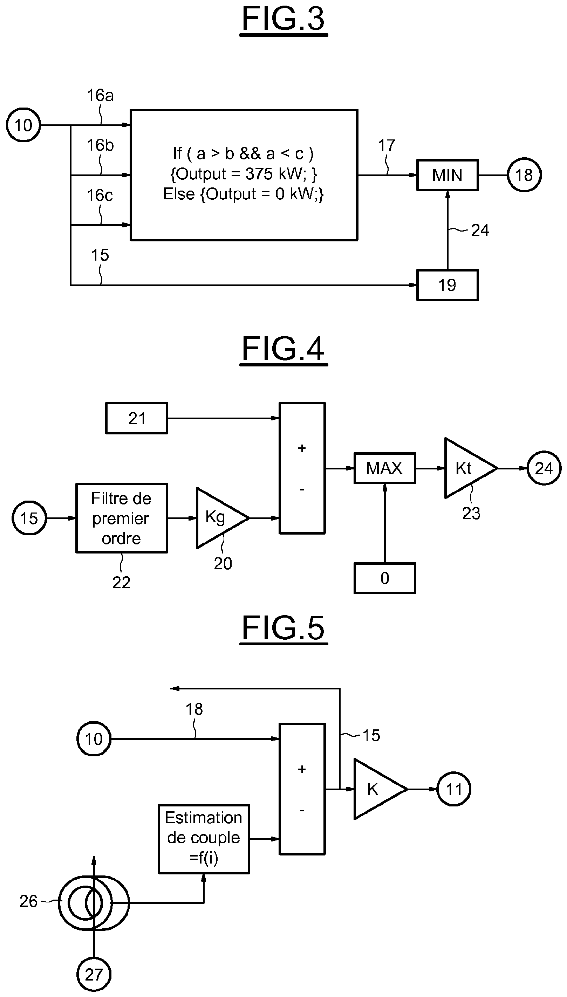

La figure 3 illustre une logique de freinage destinée à limiter le couple de la turbine basse pression 5 par dissipation de courant de la génératrice électrique 9 vers la charge dissipative 12 et, par conséquent, destinée à limiter le couple transmis à la soufflante 6.

Dans l'exemple illustré, lorsque la soufflante 6 est à un régime de rotation en moulinet dans lequel le calage acquis 16a des pales de la soufflante 6 est situé entre une limite de calage basse 16b et une limite de calage haute 16c, le calculateur de régulation 13 du système de commande 10 calcule une valeur 17 de couple à prélever sur la turbine basse pression 5.

Il en résulte une consigne de freinage se traduisant par une consigne de prélèvement de couple 18 sur la génératrice électrique 9.

Dans l'exemple illustré, le système de commande 10 intègre, pour répondre à la consigne de freinage, une logique de commande en tout ou rien.

Comme cela est illustré à la figure 4, le procédé de freinage inclut de préférence, en outre de la logique de freinage, une logique de protection 19 de la charge dissipative 12 contre la surchauffe.

A cet égard, la consigne de freinage peut être calculée en fonction de la capacité thermique de la charge dissipative 12.

La capacité thermique est égale à la différence entre une température estimée 20 de la charge dissipative 12 et une température limite 21 de la charge dissipative 12.

La température limite 21 est une constante représentant la limite de température à ne pas dépasser incluant une marge de sécurité.

La température estimée 20 est calculée à partir du couple demandé 15. Un filtre du premier ordre 22 peut être utilisé pour estimer la thermique à grosse maille, mais cette modélisation peut être réalisée avec des modèles non linéaires, tabulés, d'ordres supérieurs, et/ou basés sur d'autres informations comme la capacité de refroidissement.

Un gain proportionnel 23 de la logique de protection 19 de la charge dissipative 12 contre la surchauffe conduit à l'obtention une consigne de limitation 24 du couple prélevé sur la génératrice électrique 9. La consigne de prélèvement de couple 18 est avantageusement calculée en fonction de la logique de protection 19 de la charge dissipative 12 contre la surchauffe.

Il en résulte une saturation de la consigne de freinage proportionnellement à la capacité thermique.

Dans l'exemple illustré, la logique de protection 19 de la charge dissipative 12 contre la surchauffe ne comporte pas de composante dérivée compte tenu de la dynamique thermique lente.

Ceci permet de limiter le couple prélevé en fonction des limites thermiques de la charge dissipative 12.

En référence à la figure 5, dans l'exemple illustré, la consigne de freinage est calculée de façon à être égale au couple de freinage demandé 15 auquel est soustrait un couple 25 dédié à des consommateurs de puissance électrique de l'aéronef.

Par exemple, le couple 25 dédié à des consommateurs de puissance électrique de l'aéronef peut être estimé à partir de la valeur de courant 26 mesurée dirigé vers les consommateurs du réseau électrique 27 de l'aéronef.

Comme cela est illustré à la figure 2, on pourra prévoir qu'un redresseur 28 soit positionné entre la résistance 11 de la charge dissipative et le stator 9b de la génératrice électrique 9.

Selon un autre mode de réalisation, la charge dissipative 12 peut être formée par la génératrice électrique 9 si toutefois la génératrice électrique 9 est capable d'absorber l'énergie associée au couple supplémentaire prélevé sur l'arbre basse pression 7 sans générer de feu ou de dégradation permanente. La résistance 11 ajustée pour répondre à la consigne de freinage est alors en série avec la résistance interne de la génératrice électrique 9.

Dans le cas où la charge dissipative 12 est formée par la génératrice électrique 9, la génératrice électrique 9 sera, de préférence, court-circuitée, en connectant par exemple ses bornes ensemble par la résistance 11 variable, et au même temps déconnectée du réseau électrique 27 de l'aéronef, c'est-à-dire mise en circuit ouvert avec le réseau électrique 27. Il est ainsi possible de protéger les consommateurs présents sur le réseau électrique 27. La résistance 11 variable permet d'ajuster le courant de court-circuit traversant la génératrice électrique 9.

A cet égard, la turbomachine 1 peut comprendre un relais de commutation apte à isoler la génératrice électrique 9 du réseau électrique de l'aéronef.

On pourra également prévoir que la consigne de freinage soit calculée et la résistance 11 de court-circuit de la génératrice électrique 9 soit ajustée par le calculateur de la génératrice électrique 9.

## Revendications

1. Procédé de freinage d'une turbomachine pour aéronef comportant une soufflante (6) ou une hélice reliée à une turbine (5) par un arbre (7), et une génératrice électrique (9) connectée à l'arbre (7), le procédé comprenant les étapes suivantes :
une requête de freinage de la turbomachine par inversion de poussée ;
un calcul d'une consigne de freinage de la turbine (5) par un système de commande (10) ; et
en réponse à la consigne de freinage, un ajustement par le système de commande (10) d'une résistance (11) d'une charge dissipative (12) pour le prélèvement de puissance électrique de la génératrice électrique (9) vers la charge dissipative (12).

2. Procédé de freinage selon la revendication 1, comprenant un contrôle de calage des pales de la soufflante (6) ou de l'hélice, l'étape d'ajustement de la résistance (11) étant effectuée lorsque la soufflante (6) ou l'hélice fonctionne à un régime de rotation en moulinet.

3. Procédé de freinage selon la revendication 1 ou 2, dans lequel la consigne de freinage est égale à un couple demandé (15) pour le freinage auquel est soustrait un couple (25) dédié à des consommateurs de puissance électrique de l'aéronef.

4. Procédé de freinage selon l'une quelconque des revendications précédentes, dans lequel la consigne de freinage est calculée en fonction de la capacité thermique de la charge dissipative (12).

5. Procédé de gestion selon l'une quelconque des revendications précédentes, dans lequel la charge dissipative (12) est formée par la génératrice électrique (9).

6. Procédé de freinage selon la revendication 5, dans lequel la génératrice électrique (9) est mise en court-circuit interne et simultanément déconnectée du réseau électrique de l'aéronef lors du prélèvement de puissance électrique.

7. Procédé de freinage selon l'une quelconque des revendications 1 à 4, dans lequel la résistance (11) de la charge dissipative (12) est formée par une résistance d'un système de dégivrage.

8. Procédé de freinage selon l'une quelconque des revendications 1 à 4, dans lequel la turbomachine (1) comprend un corps basse pression et un corps haute pression, la turbine (5) reliée à la soufflante (6) ou hélice étant une turbine du corps basse pression, la résistance étant formée par un contrôleur de moteur électrique haute pression du corps haute pression, et la charge dissipative étant formée par un moteur électrique du corps haute pression.

9. Turbomachine d'aéronef comportant une soufflante (6) ou une hélice reliée à une turbine (5) par un arbre (7), et une génératrice électrique (9) connectée à l'arbre (7) la turbomachine (1) comprenant un système de commande configuré pour calculer une consigne de freinage de la turbine (5) en réponse à une requête de freinage de la turbomachine par inversion de poussée, et configuré pour ajuster une résistance (11) d'une charge dissipative (12) en réponse à la consigne de freinage pour le prélèvement de puissance électrique de la génératrice électrique (9) vers la charge dissipative (12).

10. Turbomachine selon la revendication 9, dans laquelle le système de commande est configuré pour calculer la consigne freinage en fonction de la capacité thermique de la charge dissipative (12).

11. Turbomachine selon la revendication 9 ou 10, dans laquelle la charge dissipative (12) est formée par la génératrice électrique (9).

12. Aéronef comprenant au moins une turbomachine selon l'une quelconque des revendications 9 à 11.

## Patentansprüche

1. Verfahren zum Bremsen einer Turbinenmaschine für Flugzeuge, die ein Gebläse (6) oder einen Propeller, das bzw. der über eine Welle (7) mit einer Turbine (5) verbunden ist, und einen elektrischen Generator (9) aufweist, der mit der Welle (7) verbunden ist, wobei das Verfahren die folgenden Schritte umfasst:
Anfordern des Bremsens der Turbomaschine durch Schubumkehr;
Berechnen eines Bremssollwerts der Turbine (5) durch ein Steuersystem (10); und
als Reaktion auf den Bremssollwert, Einstellen eines Widerstands (11) einer dissipativen Last (12) durch das Steuersystem (10) für die Entnahme elektrischer Leistung von dem elektrischen Generator (9) zur dissipativen Last (12).

2. Bremsverfahren nach Anspruch 1, umfassend das Steuern der Verstellung der Flügel des Gebläses (6) oder des Propellers, wobei der Schritt des Einstellens des Widerstands (11) durchgeführt wird, wenn das Gebläse (6) oder der Propeller mit einer freidrehenden Drehzahl läuft.

3. Bremsverfahren nach Anspruch 1 oder 2, wobei der Bremssollwert gleich einem angeforderten Drehmoment (15) für die Bremsung ist, von dem ein Drehmoment (25) abgezogen wird, das für elektrische Leistungsverbraucher des Flugzeugs bestimmt ist.

4. Bremsverfahren nach einem der vorhergehenden Ansprüche, wobei der Bremssollwert in Abhängigkeit von der Wärmekapazität der dissipativen Last (12) berechnet wird.

5. Verwaltungsverfahren nach einem der vorhergehenden Ansprüche, wobei die dissipative Last (12) durch den elektrischen Generator (9) gebildet wird.

6. Bremsverfahren nach Anspruch 5, wobei der elektrische Generator (9) bei der Entnahme elektrischer Leistung intern kurzgeschlossen und gleichzeitig von dem Stromnetz des Flugzeugs getrennt wird.

7. Bremsverfahren nach einem der Ansprüche 1 bis 4, wobei der Widerstand (11) der dissipativen Last (12) durch einen Widerstand eines Enteisungssystems gebildet wird.

8. Bremsverfahren nach einem der Ansprüche 1 bis 4, wobei die Turbomaschine (1) einen Niederdruckkörper und einen Hochdruckkörper umfasst, wobei die mit dem Gebläse (6) oder Propeller verbundene Turbine (5) eine Turbine des Niederdruckkörpers ist, wobei der Widerstand durch eine Hochdruckmotorsteuerung des Hochdruckkörpers gebildet wird und die dissipative Last durch einen Elektromotor des Hochdruckkörpers gebildet wird.

9. Flugzeugturbomaschine, die ein Gebläse (6) oder einen Propeller, das bzw. der über eine Welle (7) mit einer Turbine (5) verbunden ist, und einen elektrischen Generator (9) aufweist, der mit der Welle (7) verbunden ist, wobei die Turbomaschine (1) ein Steuersystem umfasst, das so konfiguriert ist, dass es einen Bremssollwert der Turbine (5) als Reaktion auf eine Bremsanforderung der Turbomaschine durch Schubumkehr berechnet, und so konfiguriert ist, dass es einen Widerstand (11) einer dissipativen Last (12) als Reaktion auf den Bremssollwert für die Entnahme elektrischer Leistung von dem elektrischen Generator (9) zur dissipativen Last (12) einstellt.

10. Turbomaschine nach Anspruch 9, wobei das Steuersystem so konfiguriert ist, dass es den Bremssollwert in Abhängigkeit von der Wärmekapazität der dissipativen Last (12) berechnet.

11. Turbomaschine nach Anspruch 9 oder 10, wobei die dissipative Last (12) durch den elektrischen Generator (9) gebildet wird.

12. Flugzeug, das mindestens eine Turbomaschine nach einem der Ansprüche 9 bis 11 umfasst.

## Claims

1. Method for braking an aircraft turbine engine including a fan (6) or a propeller connected to a turbine (5) by a shaft (7) and an electricity generator (9) connected to the shaft (7), the method comprising the following steps:
a request to brake the turbine engine by thrust reversal;
a calculation of a turbine (5) braking setpoint by a control system (10); and
in response to the braking setpoint, an adjustment by the control system (10) of a resistance (11) of a dissipative load (12) to draw electrical power from the electricity generator (9) to the dissipative load (12).

2. Braking method according to claim 1, comprising controlling the pitch of the blades of the fan (6) or of the propeller, the step of adjusting the resistance (11) being carried out when the fan (6) or the propeller operates at a windmilling rotational speed.

3. Braking method according to claim 1 or 2, wherein the braking setpoint is equal to a requested torque (15) for the braking from which is subtracted a torque (25) dedicated to electrical-power consumers of the aircraft.

4. Braking method according to any one of the preceding claims, wherein the braking setpoint is calculated as a function of the thermal capacity of the dissipative load (12).

5. Management method according to any one of the preceding claims, wherein the dissipative load (12) is formed by the electricity generator (9).

6. Braking method according to claim 5, wherein the electricity generator (9) is internally short-circuited and simultaneously disconnected from the electrical network of the aircraft during the drawdown of electrical power.

7. Braking method according to any one of claims 1 to 4, wherein the resistance (11) of the dissipative load (12) is formed by a resistance of a de-icing system.

8. Braking method according to any one of claims 1 to 4, wherein the turbine engine (1) comprises a low-pressure spool and a high-pressure spool, the turbine (5) connected to the fan (6) or propeller being a turbine of the low-pressure spool, the resistor being formed by a high-pressure electric motor controller of the high-pressure spool, and the dissipative load being formed by an electric motor of the high-pressure spool.

9. Aircraft turbine engine including a fan (6) or a propeller connected to a turbine (5) by a shaft (7), and an electricity generator (9) connected to the shaft (7), the turbine engine (1) comprising a control system configured to calculate a turbine (5) braking setpoint in response to a request to brake the turbine engine by thrust reversal, and configured to adjust a resistance (11) of a dissipative load (12) in response to the braking setpoint to draw electrical power from the electricity generator (9) to the dissipative load (12).

10. Turbine engine according to claim 9, wherein the control system is configured to calculate the braking setpoint as a function of the thermal capacity of the dissipative load (12).

11. Turbine engine according to claim 9 or 10, wherein the dissipative load (12) is formed by the electricity generator (9).

12. Aircraft comprising at least one turbine engine according to any one of claims 9 to 11.
